# EUROPÄISCHE PATENTANMELDUNG

(11) **EP 3 854 280 A1**
(43) Veröffentlichungstag der Anmeldung: **28.07.2021**
(21) Anmeldenummer: 20153599.4
(22) Anmeldetag: 24.01.2020
(51) Int. Cl.: A47L 5/14, A01G 20/47

(54) **MASCHINE ZUM AUFSAUGEN UND ZERKLEINERN VON LAUB**

(71) Anmelder: Hartmann, Werner, 47804 Krefeld (DE); Hartmann, Arnt, 47906 Kempen (DE); Fiedler, Volkhard, 47804 Krefeld (DE); Fiedler, Matthias, 47804 Krefeld (DE)
(72) Erfinder: Hartmann, Werner, 47804 Krefeld (DE); Hartmann, Arnt, 47906 Kempen (DE); Fiedler, Volkhard, 47804 Krefeld (DE); Fiedler, Matthias, 47804 Krefeld (DE)

(57) **Zusammenfassung**

Die Erfindung betrifft eine Maschine zum Aufsaugen und Zerkleinern von Laub, mit einem einen Einlass und einen Auslass aufweisenden kanalförmigen Gehäuse, in dem ein auf einer drehbar gelagerten Welle angeordneter motorisch angetriebener Rotor mit Rotorflügeln vorgesehen ist, wobei die Rotorflügel für das Laubeinsaugen durch den Einlass zumindest in einem Teilbereich schräg angestellt sind und an ihrer Vorderseite eine Schneidkante aufweisen.

Für eine verbesserte stärkere Zerkleinerung soll zumindest ein weiterer, ebenfalls auf einer drehbar gelagerten Welle angeordneter und motorisch angetriebener Rotor mit mehreren Rotorflügeln in dem Gehäuse vorgesehen sein, wobei die Rotorflügel für das Einsaugen des Laubes durch den Einlass zumindest in einem Teilbereich jeweils schräg angestellt sind und in Drehrichtung gesehen an ihrer Vorderseite jeweils eine Schneidkante aufweisen, wobei die Wellen der Rotoren koaxial vorgesehen sind und die Rotoren in Einsaugrichtung gesehen hintereinander angeordnet sind, und wobei zumindest zwei in Einsaugrichtung gesehen hintereinander liegende Rotoren gegenläufig drehend angetrieben sind.

## Beschreibung

Die Erfindung betrifft eine Maschine, insbesondere fahrbare Maschine, zum Aufsaugen und Zerkleinern von Laub, mit einem einen Einlass und einen Auslass aufweisenden kanalförmigen Gehäuse, in dem ein auf einer drehbar gelagerten Welle angeordneter und von einem Motor angetriebener Rotor mit mehreren Rotorflügeln vorgesehen ist, wobei die Rotorflügel für das Einsaugen des Laubes durch den Einlass zumindest in einem Teilbereich jeweils schräg angestellt sind und in Drehrichtung gesehen an ihrer Vorderseite jeweils eine Schneidkante aufweisen.

Aus der Praxis sind derartige Maschinen bekannt, die in der Regel zur Entsorgung des vor allem im Herbst anfallenden Laubs eingesetzt werden. Dabei wird das Laub nicht nur aufgesaugt, sondern gleichzeitig auch noch in einem gewissen Maße zerkleinert.

Nachteilig hierbei ist, dass die Zerkleinerung nicht stark genug erfolgt, so dass der Raumbedarf des zerkleinerten Guts noch recht hoch ist. Auch ist durch die nicht so starke Zerkleinerung der biologische Abbau verlangsamt, da die Bakterien bei stärker zerkleinertem Gut leichter eindringen können und so die Kompostierung beschleunigt erfolgen kann.

Aufgabe der Erfindung ist es, die vorgenannten Nachteile zu vermeiden und eine Maschine zum Aufsaugen und Zerkleinern von Laub anzugeben, mit der eine verbesserte und stärkere Zerkleinerung möglich ist.

Diese Aufgabe wird bei einer gattungsgemäßen Maschine zum Aufsaugen und Zerkleinern von Laub dadurch gelöst, dass zumindest ein weiterer, ebenfalls auf einer drehbar gelagerten Welle angeordneter und von einem Motor angetriebener Rotor mit mehreren Rotorflügeln in dem Gehäuse vorgesehen ist, wobei die Rotorflügel für das Einsaugen des Laubes durch den Einlass zumindest in einem Teilbereich jeweils schräg angestellt sind und in Drehrichtung gesehen an ihrer Vorderseite jeweils eine Schneidkante aufweisen, wobei die Wellen der Rotoren koaxial vorgesehen sind und die Rotoren in Einsaugrichtung gesehen hintereinander angeordnet sind, und wobei zumindest zwei in Einsaugrichtung gesehen hintereinander liegende Rotoren gegenläufig drehend angetrieben sind. Die "Anstellung" der Rotorflügel ist dabei jeweils so gewählt, dass diese bei ihrer normalen Drehrichtung das Laub etc. jeweils einsaugen.

Dabei ist üblicherweise pro Welle jeweils ein Rotor vorgesehen, da für eine abweichende Drehrichtung auch eine andere Welle erforderlich ist. Wenn zwei direkt hintereinander angeordnete Rotoren gleichdrehend sind, können diese jedoch auf derselben Welle angeordnet sein.

Auch wenn für den Betrieb prinzipiell nur die zum Einsaugen des Laubes geeignete Drehrichtung der die Rotoren tragenden Welle(n) erforderlich ist, kann für ein lösen einer Verstopfung oder Blockade eine kurzfristige Umkehr der Drehrichtung möglich sein. Dies ist bei einem Elektromotor durch entsprechende Ansteuerung einfach möglich. Bei einem Verbrennungsmotor kann ein Umkehrgetriebe oder aber einfach eine Kupplung für ein manuelles Zurückdrehen der Rotoren vorgesehen sein.

Somit resultiert bei gleicher Antriebsleistung eine verbesserte Saugleistung, da der dem Luftstrom durch den Rotor aufgeprägte Drall durch den nächsten, entgegengesetzt drehenden Rotor wieder ausgeglichen und neutralisiert wird. Zudem wird durch die gegenläufige Drehrichtung der Rotoren der Schneideffekt verbessert. Durch die Kombination von Luft-/Laubfördern einerseits und schneiden mittels der Schneidkanten andererseits wird zudem die Gefahr von Verstopfungen deutlich verringert.

Vorzugsweise können bei zumindest einem Rotor die Rotorflügel als sichelförmig nach außen verlaufende Lamellen, insbesondere als konvex sichelförmig nach außen verlaufende Lamellen ausgebildet sein. Dies hat den Vorteil, dass ein "Verhaken" bei störrischem Gut weniger wahrscheinlich ist als es bei einer konkav sichelförmig nach außen verlaufenden Lamelle, die ähnlich einer Sense geformt wäre, der Fall sein würde.

Erfindungsgemäß können bei zumindest einem Rotor die äußeren Kanten der Rotorflügel mit Zacken bestückt sein, so dass hierdurch auch widerstandsfähigeres Gut zerrissen oder getrennt bzw. abgetrennt wird.

Auch kann der Winkel, in dem die Rotorflügel angestellt sind, von der Welle radial nach außen abnehmen, so dass unter Berücksichtigung der mit zunehmendem Abstand zur Welle steigenden Umfangsgeschwindigkeiten die Fördergeschwindigkeit vereinheitlicht wird.

Erfindungsgemäß kann bei zumindest einem Rotor die Breite der Rotorflügel in zumindest einem Teilbereich der Erstreckung von der Welle radial nach außen abnehmen und/oder bei zumindest einem Rotor die Breite der Rotorflügel in zumindest einem Teilbereich der Erstreckung von der Welle radial nach außen zunehmen. Die Rotorflügel können sich in radialer Richtung verjüngen oder verbreitern oder eine beliebige Kombination von Abfolgen hiervon. Beispielsweise können die Rotorflügel in der Draufsicht eine rauten- oder mandelförmige Ausgestaltung haben. Alternativ ist auch eine taillierte Form möglich, bei der sich die Rotorflügel in radialer Richtung zunächst verjüngen oder anschließend wieder verbreitern.

Vorteilhafterweise kann zumindest eine Schneidkante durch eine in Drehrichtung des Rotors gesehen an der Vorderkante des Rotors angebrachte Schneidleiste gebildet sein, so dass ein Austausch bzw. Aufarbeiten der Schneidleiste bei Verschleiß bzw. Abstumpfen einfach und ohne Demontage des Rotors möglich ist.

Vorzugsweise kann eine gerade Anzahl an Rotoren mit wenigstens vier Rotoren vorgesehen sein, von denen die eine Hälfte der Rotoren in eine erste Richtung dreht und die andere Hälfte der Rotoren in die entgegengesetzte Richtung dreht. Somit heben sich die entsprechenden Kräfte, welche im Betrieb und bei einer Betriebszustandsänderung der Maschine durch die Trägheit der Rotoren auf die Maschine wirken, gegenseitig auf. Es kann aber auch eine ungerade Anzahl an Rotoren vorgesehen sein.

Bei einem bevorzugten Ausführungsbeispiel der Erfindung können alle Rotoren mit einem fest eingestellten Drehzahlverhältnis, insbesondere mit einer übereinstimmenden Drehzahl, angetrieben werden. Hierdurch wird der technische Aufbau vereinfacht und der Antrieb sämtlicher Rotoren kann in einfacher Weise mit einem Motor erfolgen.

Insoweit können zumindest zwei Rotoren, insbesondere alle Rotoren, von einem einzigen Motor angetrieben werden, der über ein entsprechendes Wendegetriebe wenigstens einen Rotor in eine erste Richtung dreht und wenigstens einen anderen Rotor in die entgegengesetzte Richtung dreht, vorzugsweise einen ersten Teil oder die eine Hälfte der Rotoren in eine erste Richtung dreht und einen zweiten Teil oder die andere Hälfte der Rotoren in die entgegengesetzte Richtung dreht.

Dabei können die koaxial angeordneten Wellen der Rotoren über ein entsprechendes Getriebe von einem einzigen Motor angetrieben werden.

Bei einem bevorzugten Ausführungsbeispiel der Erfindung kann das Gehäuse zylindrisch ausgebildet sein, wobei das Gehäuse vertikal oder in einem spitzen Winkel zur Vertikalen ausgerichtet ist, und wobei der Einlass in der unteren Schnittkreisfläche vorgesehen ist, vorzugsweise den Bereich der gesamten unteren Schnittkreisfläche umfasst und wobei der Auslass im oberen Bereich des Gehäuses vorgesehen ist und vorzugsweise als radialer oder tangentialer Auslass ausgebildet ist. Dabei kann bei einer fahrbaren Maschine, die als Aufsitzmaschine ähnlich einem Aufsitzmäher ausgebildet ist, der Auslass in Fahrtrichtung nach hinten vorgesehen und vorzugsweise innerhalb der Breite der Maschine angeordnet sein.

Insoweit kann bei einem bevorzugten Ausführungsbeispiel der Erfindung die Maschine unterseitig mit wenigstens zwei Rädern oder Rollen, vorzugsweise drei oder vier Rädern oder Rollen, versehen sein und insbesondere einen Motor für den Antrieb von zumindest einem Teil der Räder oder Rollen aufweisen.

Vorteilhafterweise kann sich an den Auslass ein Zyklonabscheider und/oder ein abnehmbarer Auffangbehälter anschließen, der vorzugsweise mit zumindest partiell luftdurchlässigen Wänden versehen ist und/oder als ausziehbarer Laubkasten ausgebildet ist. Der Auffangbehälter kann dabei analog einem Rasenmäher-Fangkorb ausgebildet sein und insbesondere ein Gewebe mit kleiner Maschenweite von ca. 0,5 mm bis ca. 2 mm aufweisen. Dabei kann der Zyklonabscheider in einem spitzen Winkel zum Fangkorb geneigt oberhalb des Fangkorbs angeordnet sein, so dass die abgeschiedenen Partikel direkt in den Fangkorb fallen können. Der Auffangbehälter kann ähnlich einem Rasenmäher auch eingehängt sein, was eine einfache und technisch etablierte sowie leicht lösbare Befestigung ermöglicht.

Vorteilhafterweise kann der Abstand des untersten Rotors zum Untergrund, auf dem sich die Maschine befindet, veränderbar sein, wobei zur Veränderung der Abstand des untersten Rotors zum Untergrund, auf dem sich die Maschine befindet, vorzugsweise die Position der Räder bzw. Rollen zum Gehäuse verstellbar ist. Alternativ oder aber auch ergänzend kann auch eine interne Verstellung vorgesehen sein, mit der zumindest die Höhe des untersten Rotors, und damit sein Abstand zum Untergrund, veränderbar und auf einen geeigneten Wert einstellbar ist.

Erfindungsgemäß kann das kanalförmige Gehäuse mit den darin angeordneten Rotoren in dem Bereich zwischen zwei in Einsaugrichtung gesehen hintereinander angeordneten Rotoren zumindest eine Abwinklung aufweisen, wobei insbesondere die Drehachse der Welle, an welcher der Rotor vor der Abwinklung angeordnet ist, und die Drehachse der Welle, an welcher der Rotor nach der Abwinklung angeordnet ist, parallel zueinander ausgerichtet sind. Somit muss der "Kanal", in dem die Rotoren angeordnet sind, nicht zwingend geradlinig sein, was erweiterte Gestaltungsmöglichkeiten bei der Maschine eröffnet. Dabei kann die Abwinklung entweder relativ scharfkantig sein, sie kann aber auch als Biegung oder sogar nur leichte Krümmung ausgebildet sein.

Bei einem bevorzugten Ausführungsbeispiel der Erfindung kann die Maschine zum Rasenmähen ausgebildet sein und unterseitig mit drei oder vier Rädern versehen sein, wobei die Schneidkanten der Rotorflügel des untersten Rotors in einer Rotationsebene liegen und der Abstand des untersten Rotors zum Untergrund, auf dem sich die Maschine befindet, entsprechend so gering ausgebildet ist, dass die Schneidkanten mit dem zu mähenden Rasen bei der Nutzung der Maschine in Kontakt sind. Dabei kann der unterste Rotor gegenüber den sonstigen Rotoren abweichend ausgestaltet sein. Auch kann die Drehrichtung des untersten Rotors beliebig in Bezug auf die sonstigen Rotoren sein.

Dabei kann der Abstand des untersten Rotors zum Untergrund, auf dem sich die Maschine befindet, zur Einstellung der gewünschten Schnitthöhe verstellbar sein. Der Abstand und die daraus resultierende Schnitthöhe kann dabei beispielsweise auf 3 cm bis 10 cm, vorzugsweise auf 4 cm bis 6 cm und bevorzugt auf ca. 5 cm einstellbar sein.

Im Folgenden wird ein in der Zeichnung dargestelltes Ausführungsbeispiel der Erfindung erläutert. Es zeigen:
- Fig. 1: eine seitlich, teilgeschnittene Ansicht einer erfindungsgemäßen Maschine zum Aufsaugen und Zerkleinern von Laub,
- Fig. 2: eine Seitenansicht eines Rotors von Fig.1 und
- Fig. 3: eine Draufsicht auf den Gegenstand nach Fig. 2.

In allen Figuren werden für gleiche bzw. gleichartige Bauteile übereinstimmende Bezugszeichen verwendet.

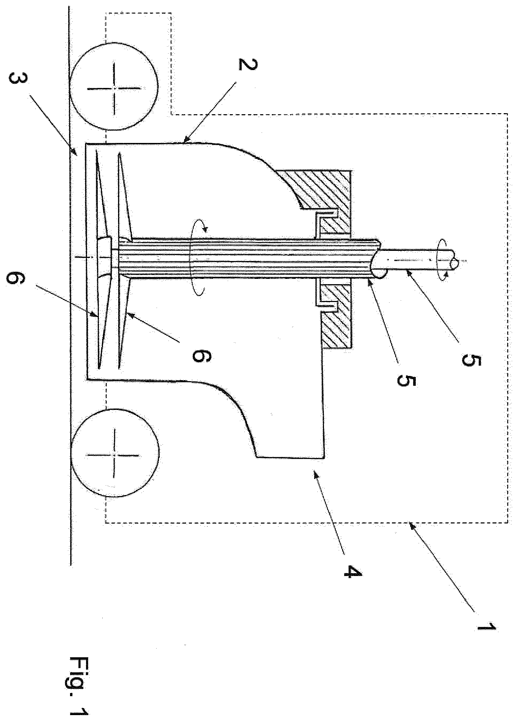

Fig. 1 zeigt eine Maschine 1 zum Aufsaugen und Zerkleinern von in der Zeichnung nicht dargestelltem Laub. Die Maschine 1 weist dabei ein kanalförmiges Gehäuse 2 mit einen Einlass 3 und einen Auslass 4 auf. In dem Gehäuse 2 sind zwei drehbar gelagerte Wellen 5 angeordnet, die von einem in der Zeichnung nicht dargestellten Motor angetrieben werden. Dabei ist auf jeder Welle 5 jeweils ein Rotor 6 mit mehreren Rotorflügeln 7 angeordnet.

Die Wellen 5 sind als eine Anordnung von mehreren koaxial vorgesehenen Wellen 5 ausgebildet. Dabei ist üblicherweise - wie im dargestellten Ausführungsbeispiel gezeigt - pro Welle 5 jeweils ein Rotor 6 vorgesehen, da für eine abweichende Drehrichtung auch eine andere Welle 5 erforderlich ist. Wenn zwei direkt hintereinander angeordnete Rotoren 6 gleichdrehend sind, können diese jedoch auf derselben Welle 5 angeordnet sein.

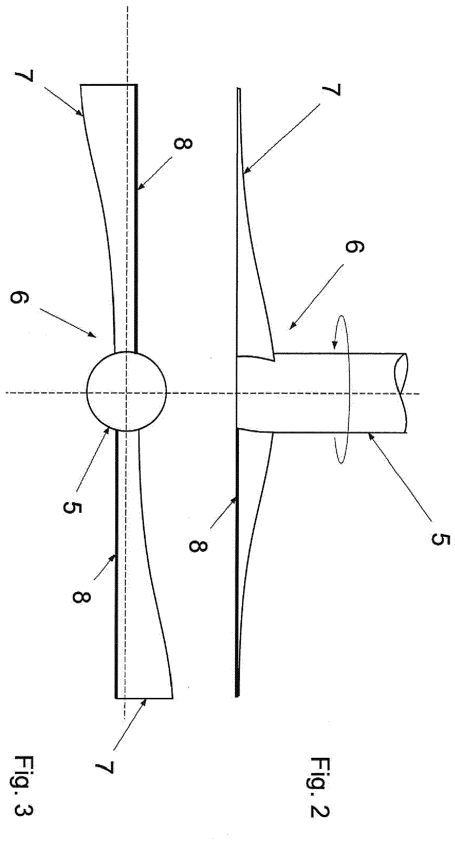

Wie aus den Fig. 2 und 3 ersichtlich, sind die Rotorflügel 7 für das Einsaugen des Laubes durch den Einlass 3 in einem an die Welle 5 angrenzenden Teilbereich jeweils schräg angestellt und weisen in Drehrichtung gesehen an ihrer Vorderseite jeweils eine Schneidkante 8 auf.

Dabei ist der Winkel, in dem die Rotorflügel 7 angestellt sind, von der Welle 6 radial nach außen abnehmend ausgebildet. Der Rotorflügel 7 ist dabei durch einen Streifen gleichbleibender Breite gebildet, der radial zur Welle 5 hin gegenüber der Rotationsebene zunehmend tordiert ist.

## Patentansprüche

1. Maschine (1), insbesondere fahrbare Maschine (1), zum Aufsaugen und Zerkleinern von Laub, mit einem einen Einlass (3) und einen Auslass (4) aufweisenden kanalförmigen Gehäuse (2), in dem ein auf einer drehbar gelagerten Welle (5) angeordneter und von einem Motor angetriebener Rotor (6) mit mehreren Rotorflügeln (7) vorgesehen ist, wobei die Rotorflügel (7) für das Einsaugen des Laubes durch den Einlass (3) zumindest in einem Teilbereich jeweils schräg angestellt sind und in Drehrichtung gesehen an ihrer Vorderseite jeweils eine Schneidkante (8) aufweisen, **dadurch gekennzeichnet, dass** zumindest ein weiterer, ebenfalls auf einer drehbar gelagerten Welle (5) angeordneter und von einem Motor angetriebener Rotor (6) mit mehreren Rotorflügeln (7) in dem Gehäuse (2) vorgesehen ist, wobei die Rotorflügel (7) für das Einsaugen des Laubes durch den Einlass (3) zumindest in einem Teilbereich jeweils schräg angestellt sind und in Drehrichtung gesehen an ihrer Vorderseite jeweils eine Schneidkante (8) aufweisen, wobei die Wellen (5) der Rotoren (6) koaxial vorgesehen sind und die Rotoren (6) in Einsaugrichtung gesehen hintereinander angeordnet sind, und wobei zumindest zwei in Einsaugrichtung gesehen hintereinander liegende Rotoren (6) gegenläufig drehend angetrieben sind.

2. Maschine (1) zum Aufsaugen und Zerkleinern von Laub nach dem vorhergehenden Anspruch, **dadurch gekennzeichnet, dass** bei zumindest einem Rotor (6) die Rotorflügel (7) als sichelförmig nach außen verlaufende Lamellen, insbesondere als konvex sichelförmig, nach außen verlaufende Lamellen ausgebildet sind.

3. Maschine (1) zum Aufsaugen und Zerkleinern von Laub nach einem der vorhergehenden Ansprüche, **dadurch gekennzeichnet, dass** bei zumindest einem Rotor (6) die äußeren Kanten der Rotorflügel (7) mit Zacken bestückt sind und/oder der Winkel, in dem die Rotorflügel (7) angestellt sind, von der Welle (5) radial nach außen abnimmt.

4. Maschine (1) zum Aufsaugen und Zerkleinern von Laub nach einem der vorhergehenden Ansprüche, **dadurch gekennzeichnet, dass** bei zumindest einem Rotor (6) die Breite der Rotorflügel (7) in zumindest einem Teilbereich der Erstreckung von der Welle (5) radial nach außen abnimmt und/oder bei zumindest einem Rotor (6) die Breite der Rotorflügel (7) in zumindest einem Teilbereich der Erstreckung von der Welle (5) radial nach außen zunimmt.

5. Maschine (1) zum Aufsaugen und Zerkleinern von Laub nach dem vorhergehenden Anspruch, **dadurch gekennzeichnet, dass** zumindest eine Schneidkante (8) durch eine in Drehrichtung des Rotors (6) gesehen an der Vorderkante des Rotors (6) angebrachte Schneidleiste gebildet ist.

6. Maschine (1) zum Aufsaugen und Zerkleinern von Laub nach einem der vorhergehenden Ansprüche, **dadurch gekennzeichnet, dass** eine gerade Anzahl an Rotoren (6) mit wenigstens vier Rotoren (6) vorgesehen ist, von denen die eine Hälfte der Rotoren (6) in eine erste Richtung dreht und die andere Hälfte der Rotoren (6) in die entgegengesetzte Richtung dreht.

7. Maschine (1) zum Aufsaugen und Zerkleinern von Laub nach einem der vorhergehenden Ansprüche, **dadurch gekennzeichnet, dass** alle Rotoren (6) mit einem fest eingestellten Drehzahlverhältnis, insbesondere mit einer übereinstimmenden Drehzahl, angetrieben werden.

8. Maschine (1) zum Aufsaugen und Zerkleinern von Laub nach einem der vorhergehenden Ansprüche, **dadurch gekennzeichnet, dass** zumindest zwei Rotoren (6), insbesondere alle Rotoren (6), von einem einzigen Motor angetrieben werden, der über ein entsprechendes Wendegetriebe wenigstens einen Rotor (6) in eine erste Richtung dreht und wenigstens einen anderen Rotor (6) in die entgegengesetzte Richtung dreht, vorzugsweise einen ersten Teil oder die eine Hälfte der Rotoren (6) in eine erste Richtung dreht und einen zweiten Teil oder die andere Hälfte der Rotoren (6) in die entgegengesetzte Richtung dreht.

9. Maschine (1) zum Aufsaugen und Zerkleinern von Laub nach dem vorhergehenden Anspruch, **dadurch gekennzeichnet, dass** die koaxial angeordneten Wellen (5) der Rotoren (6) über ein entsprechendes Getriebe von einem einzigen Motor angetrieben werden.

10. Maschine (1) zum Aufsaugen und Zerkleinern von Laub nach einem der vorhergehenden Ansprüche, **dadurch gekennzeichnet, dass** das Gehäuse (2) zylindrisch ausgebildet ist, wobei das Gehäuse (2) vertikal oder in einem spitzen Winkel zur Vertikalen ausgerichtet ist, und wobei der Einlass (3) in der unteren Schnittkreisfläche vorgesehen ist, vorzugsweise den Bereich der gesamten unteren Schnittkreisfläche umfasst und wobei der Auslass (4) im oberen Bereich des Gehäuses (2) vorgesehen ist und vorzugsweise als radialer oder tangentialer Auslass (4) ausgebildet ist.

11. Maschine (1) zum Aufsaugen und Zerkleinern von Laub nach einem der vorhergehenden Ansprüche, **dadurch gekennzeichnet, dass** die Maschine (1) unterseitig mit wenigstens zwei Rädern oder Rollen, vorzugsweise drei oder vier Rädern oder Rollen, versehen ist und insbesondere einen Motor für den Antrieb von zumindest einem Teil der Räder oder Rollen aufweist.

12. Maschine (1) zum Aufsaugen und Zerkleinern von Laub nach einem der vorhergehenden Ansprüche, **dadurch gekennzeichnet, dass** sich an den Auslass (4) ein Zyklonabscheider und/oder ein abnehmbarer Auffangbehälter anschließt, der vorzugsweise mit zumindest partiell luftdurchlässigen Wänden versehen ist und/oder als ausziehbarer Laubkasten ausgebildet ist.

13. Maschine (1) zum Aufsaugen und Zerkleinern von Laub nach einem der vorhergehenden Ansprüche, **dadurch gekennzeichnet, dass** der Abstand des untersten Rotors (6) zum Untergrund, auf dem sich die Maschine (1) befindet, veränderbar ist, wobei zur Veränderung der Abstand des untersten Rotors (6) zum Untergrund, auf dem sich die Maschine (1) befindet, vorzugsweise die Position der Räder bzw. Rollen zum Gehäuse (2) verstellbar ist.

14. Maschine (1) zum Aufsaugen und Zerkleinern von Laub nach einem der vorhergehenden Ansprüche, **dadurch gekennzeichnet, dass** das kanalförmige Gehäuse (2) mit den darin angeordneten Rotoren (6) in dem Bereich zwischen zwei in Einsaugrichtung gesehen hintereinander angeordneten Rotoren (6) zumindest eine Abwinklung aufweist, wobei insbesondere die Drehachse der Welle (5), an welcher der Rotor (6) vor der Abwinklung angeordnet ist, und die Drehachse der Welle (5), an welcher der Rotor (6) nach der Abwinklung angeordnet ist, parallel zueinander ausgerichtet sind.

15. Maschine (1) zum Aufsaugen und Zerkleinern von Laub nach einem der vorhergehenden Ansprüche, **dadurch gekennzeichnet, dass** die Maschine (1) zum Rasenmähen ausgebildet ist und unterseitig mit drei oder vier Rädern versehen ist, wobei die Schneidkanten (8) der Rotorflügel (7) des untersten Rotors (6) in einer Rotationsebene liegen und der Abstand des untersten Rotors (6) zum Untergrund, auf dem sich die Maschine (1) befindet, entsprechend so gering ausgebildet ist, dass die Schneidkanten (8) mit dem zu mähenden Rasen bei der Nutzung der Maschine (1) in Kontakt sind.

16. Maschine (1) zum Aufsaugen und Zerkleinern von Laub nach Anspruch 14, **dadurch gekennzeichnet, dass** der Abstand des untersten Rotors (6) zum Untergrund, auf dem sich die Maschine (1) befindet, zur Einstellung der gewünschten Schnitthöhe verstellbar ist.
